# EUROPEAN PATENT SPECIFICATION

(11) **EP 3 142 180 B1**
(45) Date of publication and mention of the grant of the patent: **13.05.2020**
(21) Application number: 15789893.3
(22) Date of filing: 07.07.2015
(51) Int. Cl.: H01M 10/0525, H01M 2/16, H01M 4/13, H01M 4/136, H01M 4/1397, H01M 4/36, H01M 4/58, H01M 4/583, H01M 4/62, H01M 4/70, H01M 10/0568, H01M 10/0569, H01M 10/0585, H01M 10/0587, H01M 4/587, H01M 10/42, H01M 4/02

(54) **LITHIUM SECONDARY BATTERY**
LITHIUMSEKUNDÄRBATTERIE
BATTERIE SECONDAIRE AU LITHIUM

(30) Priority: 08.05.2014 JP 2014096983
(43) Date of publication of application: 15.03.2017
(73) Proprietor: Sei Corporation, Tsu-shi, Mie, 5141118 (JP)
(72) Inventor: SAWAI, Takehiko, Tsu-shi Mie 514-1118 (JP); SAITO, Shinji, Tsu-shi Mie 514-1118 (JP); URAO, Kazunori, Tsu-shi Mie 514-1118 (JP)
(74) Representative: White, Duncan Rohan
(86) International application number: PCT/JP2015/069536
(87) International publication number: WO 2015/170785

(56) References cited:
- WO-A1-2011/049153
- WO-A1-2012/063286
- WO-A1-2012/140790
- WO-A1-2013/145925
- CA-A1- 2 794 290
- JP-A- H06 314 566
- JP-A- H11 317 241
- JP-A- 2004 200 001
- JP-A- 2008 277 128
- JP-A- 2008 311 171
- JP-A- 2009 507 353
- JP-A- 2010 108 889
- JP-A- 2013 239 352
- JP-A- 2014 007 052
- US-A1- 2013 330 609
- LONGFEI ZHANG ET AL: "Synergistic effect between lithium bis(fluorosulfonyl)imide (LiFSI) and lithium bis-oxalato borate (LiBOB) salts in LiPF6-based electrolyte for high-performance Li-ion batteries", ELECTROCHIMICA ACTA., vol. 127, 17 February 2014 (2014-02-17), pages 39-44, XP055418693, GB ISSN: 0013-4686, DOI: 10.1016/j.electacta.2014.02.008

## Description

### TECHNICAL FIELD

The present invention relates to a lithium secondary battery and more particularly to a lithium secondary battery to be used as a power supply to replace a lead acid battery for an engine starter to be used for an idling stop system.

### BACKGROUND ART

The lithium secondary battery composed of a material capable of occluding and releasing lithium ions has been supplied to the market as a consumer type battery for mobile use such as a portable telephone. In recent years, the lithium secondary battery is developed as a power supply to be mounted on vehicles such as hybrid cars, electric cars, and the like. Meanwhile there is a movement of using the lithium secondary battery as the power supply to replace the lead acid battery for the engine starter to be used for the idling stop system.

The lithium secondary battery to be used for the idling stop system or a stop and go system (hereinafter referred to as ISS) is required to be discharged at a large current not less than 20 ItA to enable an engine to be operated in the vicinity of -30 degrees centigrade. The performance of the lithium secondary battery is inferior to that of the lead acid battery in this respect. The lithium secondary battery is also required to be charged regeneratively at a large current not less than 50 ItA at a braking time . It is difficult for the lead acid battery to have this performance . To achieve these objects, the following items (1) and (2) are considered: item (1): to decrease a battery resistance and item (2): to prevent precipitation of metallic lithium in an intercalation reaction of lithium ions at the negative electrode of the battery.

Regarding the item (1), there are proposals to thin positive and negative electrodes and decrease the electrode resistances by applying carbon to the surface of the aluminum current collection foil (patent document 1). There is another proposal to decrease the resistance by increasing the amount of conductive materials inside the electrodes. According to still another proposal to decrease the battery resistance, the thickness of the separator and the diameters of pores are controlled. Regarding the item (2), there is aproposal to increase the reaction area by decreasing the diameters of particles of the active substance of the positive electrode and that of the negative electrode so as to decrease the densities of charging and discharging currents. According to another proposal, to alter the active substance of the negative electrode from a graphite material to the amorphous carbon material or to lithium titanate is examined.

In the known lithium secondary battery, the positive electrode material is composed of the olivine type lithium metal phosphorous oxide having at least one phase selected from among the graphene phase and the amorphous phase on at least the surface thereof. The surface phase of the olivine type lithium metal phosphorous oxide and that of the carbon material are fusion-bonded with each other. The negative electrode material of the battery contains the graphite-based carbon material particles (soft carbon) whose surfaces are coated with the amorphous carbon material. The organic electrolytic solution thereof consists of the lithium hexafluorophosphate, serving as the supporting electrolyte, which is dissolved in the organic solvent. The separator thereof is composed of woven cloth or nonwoven cloth made of resin. The separator may be composed of glass fiber or cellulose fiber (patent document 2).

It is known that a through-hole having a projected portion is formed through a current collection foil of the lithium secondary battery (patent document 3).

It is known that as a nonaqueous electrolytic solution, a mixture of lithium imide salts and lithium hexafluorophosphate (hereinafter referred to as LiPF₆) is used (patent document 4) .

Although the above-described devices of the items (1) and (2) enable the lithium secondary battery to be charged and discharged at a large current, it is difficult for the lithium secondary battery to be discharged at not less than 20 ItA when temperature is -30 degrees centigrade and charged at not less than 50 ItA. To allow the lithium secondary battery to have a high capacity, it is disadvantageous to alter the active substance of the negative electrode from the graphite material to the amorphous carbon material and is difficult to do so from the standpoint of weight saving which is important in using the lithium secondary battery for the ISS. The above-described target values enhance the techniques for producing the lithium secondary battery for the ISS and in addition the techniques for producing batteries, having a large or high volume, which are developed to allow a HEV, a PHEV, and EV to have a long travel distance in an electromotive drive without increasing the weight thereof.

CA-A-2794290 discloses a method of producing an electrode material and a lithium-ion secondary battery. The surface layer of basic ingredient of the electrode material consists of at least one surface layer selected from among a graphene phase and an amorphous phase and is fused and bonded to a conductive material.

JP-A-2008311171 discloses a lithium secondary battery.

JP-A-2013239352 discloses a non-aqueous electrolytic secondary battery.

XP055418693 (Longfei Zhang et al, "Synergistic effect between lithium bis(fluorosulphonyl)imide (LiFSI) and Lithium bis-oxalato borate (LiBOB) salts in LiPF6-based electrolyte for high-performnce LI-ion batteries" Electrochimica ACTA, vol 127, Pages 39-44), examines the effect of Li-salt mixing in Li-ion battery electrolyte based on LiPF in ethylene carbonate and ethylmethyl carbonate.

US-A-2013/330609 discloses a non-aqueous electrolyte solution that incorporates, in prescribed contents, a compound having at least two isocyanate groups per molecule and a compound having at least two cyano groups per molecule.

### PRIOR ART DOCUMENTS

### PATENT DOCUMENTS

Patent document 1: International Publication No. WO2011/049153
Patent document 2: International Publication No. WO2012/140790
Patent document 3: Japanese Patent Application Laid-Open Publication No. 6-314566
Patent document 4: Japanese Patent Application Laid-Open Publication No. 2014-7052

### SUMMARY OF THE INVENTION

### PROBLEM TO BE SOLVED BY THE INVENTION

The present invention has been made to deal with the above-described problems. It is an object of the present invention to provide a lithium secondary battery for an ISS which can be discharged at -30 degrees centigrade and charged quickly at 25 degrees centigrade, more specifically, can be discharged at not less than 20 ItA when temperature is -30 degrees centigrade and can be charged at not less than 50 ItA.

### MEANS FOR SOLVING THE PROBLEM

The present invention provides a lithium secondary battery for an engine starter according to claim 1.

### ADVANTAGEOUS EFFECT OF THE INVENTION

In the lithium secondary battery of the present invention, the metal foil having a plurality of through-holes, formed therethrough, each having a projected portion on one surface thereof is combined with the positive and negative electrodes composed of the specific positive and negative electrode materials respectively, the specific organic electrolyte solution, and the specific separator. Therefore unlike conventional batteries, the lithium secondary battery of the present invention can be discharged at not less than 20 ItA when temperature is -30 degrees centigrade and can be charged at not less than 50 ItA and is allowed to have a life twice as long as the life of a lead acid battery for the ISS.

### BRIEF DESCRIPTION OF THE DRAWING

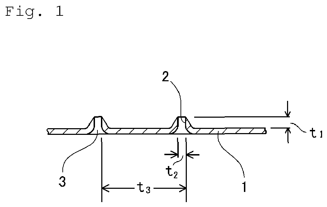

Fig. 1 is a sectional view of a metal foil having a plurality of through-holes formed therethrough.

### MODE FOR CARRYING OUT THE INVENTION

One example of each member for use in a lithium secondary battery of the present invention is described below.

A positive electrode material occludes and discharges lithium ions and consists of a mixture of lithium-containing metal phosphate compound particles whose surfaces are coated with an amorphous carbon material and a conductive carbon material. Atoms of these surface carbon materials are chemically bonded to one another.

The amorphous carbon material has at least one phase selected from among a graphene phase and an amorphous phase as its surface layer . The graphene phase means one layer of a planar six-membered ring structure of sp² bonded carbon atoms. The amorphous phase means the three-dimensionally constructed six-membered ring structure . The graphene phase and the amorphous phase are formed on the surface of the conductive carbon material. The chemical bonding of the surface carbon atoms means that the atoms of the surface carbon materials are bonded to one another owing to the turbulence of the graphene layer and/or the amorphous layer.

As the method of coating the surfaces of the lithium-containing metal phosphate compound particles with the amorphous carbon material, after the lithium-containing metal phosphate compound particles are treated with a gas or a liquid containing hydrocarbon, the treated substance is baked in a reducing atmosphere. The amorphous carbon material is in close contact with the surfaces of the lithium-containing metal phosphate compound particles. The thickness of the coating layer consisting of the amorphous carbon material is set to 1 to 10nm and preferably 2 to 5nm. In the case where the thickness of the coating layer consisting of the amorphous carbon material is not less than 10nm, the surface-coating layer is thick and the lithium ions diffuse to a low degree to the surface of an active substance serving as a reaction portion of the battery. As a result, the battery has a deteriorated high output property.

As the lithium-containing metalphosphate compound, LiFePO₄, LiCoPO₄, and LiMnPO₄ are listed. Of these lithium-containing metal phosphate compounds, it is preferable to use LiFePO₄ which is an olivine-type lithium metal phosphorous oxide advantageous in respect of its electrochemical property, safety, and cost.

As the conductive carbon material, at least one conductive carbon material selected from among conductive carbon powder and conductive carbon fiber both of which have the graphene phase on at least the surface thereof is preferable.

As the conductive carbon powder, at least one conductive carbon powder selected from among acetylene black, Ketjen black, and powder containing graphite crystal is preferable.

As the conductive carbon fiber, at least one kind selected from among carbon fiber, graphite fiber, vapor-grown carbon fiber, carbon nanofiber, and carbon nanotube is preferable. The diameter of the carbon fiber is favorably 5nm to 200nm and more favorably 10nm to 100nm. The length of the carbon fiber is favorably 100nm to 50µm and more favorably 1µm to 30µm.

Regarding the mixing ratio of the conductive carbon material, 1 to 12 percentage by mass and preferably 4 to 10 percentage by mass of the conductive carbon material can be mixed with materials composing the positive electrode material, supposing that the entire material composing the positive electrode material is 100 percentage by mass.

In the mixture of the lithium-containing metal phosphate compound particles whose surfaces are coated with the amorphous carbon material and the conductive carbon material, the surface carbon atoms are chemically bonded to one another by baking the mixture in the reducing atmosphere.

A negative electrode material occludes and releases lithium ions and is composed of graphite particles having a specific surface area of not less than 6 m2/g and soft carbon particles. The amorphous carbon material is formed on the surfaces of these particles. There is a case in which an activated carbon layer is further formed on the surface of the negative electrode material.

As the graphite particle having the specific surface area of not less than 6m²/g, artificial graphite or a graphite-based carbon material including natural graphite are exemplified.

The soft carbon particle allows a hexagonal network plane constructed of carbon atoms, namely, a graphite structure where the graphene phases are regularly layered one upon another to be easily developed on the surface thereof when the soft carbon particle is heat-treated in an inert atmosphere or a reducing atmosphere.

The activated carbon is obtained by heat-treating carbide produced from sawdust, wood chips, charcoal, coconut shell charcoal, coal, phenol resin or rayon at a high temperature about 1000 degrees centigrade. It is favorable that the activated carbon which can be used in the present invention has a specific surface area of not less than 1000m²/g and more favorable that it has the specific surface area of 1500 to 2200m²/g. The specific surface area of the activated carbon is measured by using a BET three-point method.

Examples of commercially available products of the activated carbon which can be used in the present invention include activated carbon having a stock number MSP-20N (specific surface area: 2100m²/g) produced by Kureha Chemical Industry Co., Ltd. and Taiko activated carbon C type (specific surface area: 1680m²/g) produced by Futamura Chemical Co., Ltd.

It is preferable that the average particle diameter of the negative electrode material is 5 to 10µm. The mixing ratio of the negative electrode material to the entire material composing the negative electrode material is 60 to 95 mass% and preferably 70 to 80 mass%.

As materials for the negative electrode material, it is preferable to use the conductive carbon powder and the conductive carbon fiber in combination. The mixing ratio therebetween is set to preferably [conductive carbon powder/conductive carbon fiber = (2 to 8)/(1 to 3)] in mass ratio.

It is possible to use 1 to 12, preferably 2 to 8 percentage by mass of the conductive material for the entire material composing the negative electrode material.

In forming the activated carbon layer on the surface of the negative electrode material, the thickness of the layer thereof is not more than 10µm and favorably not more than 5µm. It is most favorable to set the thickness thereof to 1 to 3µm.

The surface carbon atoms of the particles composing the negative electrode material are chemically bonded to one another by baking the mixture in the reducing atmosphere.

A metal foil serving as a current collector has a plurality of through-holes, formed therethrough, each having a projected portion on at least one surface thereof . Fig. 1 shows one example of the metal foil.

Fig. 1 is a sectional view of a metal foil having a plurality of through-holes each having a projected portion on a surface thereof.

A metal foil 1 has a projected portion 2 formed around each through-hole 3. The through-hole 3 may be formed on the entire surface of the metal foil 1 or on a part of the surface thereof without forming the through-hole 3 on a flat portion of an unprojected surface thereof. It is preferable to form the through-hole 3 on a part of the surface of the metal foil in consideration of the strength of the metal foil serving as a current collection foil in producing the battery. It is especially preferable not to form the through-hole 3 and leave the flat portion at both widthwise ends of the current collection foil.

As the sectional configuration of the through-hole 3, it is possible to use pyramidal, cylindrical, conical configurations, and configurations formed in combinations of these configurations. The conical configuration is more favorable than the other configurations in view of a machining speed, the shot life of a machining jig, and the possibility of the generation of chips or peeled powders after the tip portion of the projected hole is machined.

It is preferable to form the through-hole 3 by breaking through the metal foil 1 to improve its current collection effect. The through-hole 3 formed by breaking through the metal foil 1 allows the lithium secondary battery to be charged and discharged at large electric current more excellently and have a higher durability against an internal short-circuit and the like at a charge/discharge cycle time than a through-hole, not having a projected portion, which is formed through the metal foil 1 by punching processing or irregularities formed thereon by emboss processing.

The through-hole is circular and has a diameter t₂ of 50 to 150µm. A height t₁ of the projected portion 2 is 50 to 400µm. A distance t₃ between adjacent through-holes 3 is 300 to 2000µm. By distributing the through-holes in the above-described range, the entire through-hole-formed surface of the metal foil receives a contact pressure . Thus when the metal foil is wound by a winding roll with the winding roll in direct contact with the through-hole-formed surface thereof, the through-holes are prevented from being closed.

An organic electrolytic solution consists of an organic solvent and a supporting electrolyte dissolved therein.

The organic solvent is mixed carbonic acid ester consisting of a plurality of carbonic acid esters mixed with one another. The mixed carbonic acid ester capable of constructing the lithium secondary battery which can be discharged at not less than 20 ItA when temperature is -30 degrees centigrade.

Examples of the carbonic acid esters include ethylene carbonate (EC), diethyl carbonate (DEC), dimethyl carbonate (DMC), and methyl ethyl carbonate (MEC). Mixed carbonic acid ester consisting of a mixture which does not freeze at -30 degrees centigrade is favorable. Mixed carbonic acid ester consisting of the ethylene carbonate (EC), the dimethyl carbonate (DMC), and the methyl ethyl carbonate (MEC) is more favorable.

The supporting electrolyte is a mixed electrolyte consisting of LiPF₆ and LiFSl mixed therewith.

The mixed electrolyte is dissolved in the organic solvent. The mixing ratio between the LiPF₆ and the LiFSl is set to preferably [LiPFe/LiFSl = (1/0.2) to (0.4/0.8)]. It is preferable to set the total concentration of the supporting electrolyte to 1.0 to 1.3mol.

The property of the battery was investigated by changing the addition amount of the LiFSl when the LiFSl is added to the LiPF₆. The DC resistance and capacity of the battery were measured by using a 3. 4V-500mAh laminate cell in an identical specification except that the mixing ratio between the LiPF₆ and the LiFSl was set to three levels, i.e., the electrolytic solution consisted of the LiPF₆, LiPF₆/LiFSl = 1/0.2, LiPF₆/LiFSl = 1/0.6. Table 1 shows the results. The ion conductance (ms/cm) of the LiPF₆ was 8.0 when it was used alone. The ion conductance (ms/cm) of the LiFSl was 10.0 when it was used alone. The viscosity (cP) of the LiPF₆ was 30 when it was used alone. The viscosity (cP) of the LiFSl was 20 when it was used alone.

**[Table 1]**

| Item of electrochemical property | LiPF₆ alone | 1M-LiPF₆ + 0.2M-LiFSl | 1M-LiPF₆ + 0.2M-LiFSl |
|---|---|---|---|
| DC resistance (mΩ) | 32.0 | 30.4 | 28.8 |
| Capacity(20CA discharge, -20°C) | 80 | 92 | 124 |

As shown in table 1, it has been found that by adding the LiFSl to the LiPF₆, the DC resistance of the battery is decreased and its capacity at low temperatures is improved.

A separator electrically insulates the positive and negative electrodes from each other and holds an electrolytic solution. It is preferable that the separator has a heat resistance to heat of not less than 200 degrees centigrade. It is also preferable that the separator has a hydrophilic group on its surface. As the hydrophilic group, -OH group and -C00H group are exemplified. It is preferable to compose the separator of fibrous non-woven cloth having oxides ceramics of group 3 and 4 elements on its surface.

The lithium secondary battery of the present invention is composed in combination of the electrode material and the conductive material composing the positive and negative electrodes, the metal foil serving as the current collector, the organic electrolyte, and the separator. Thus the lithium secondary battery of the present invention is capable of satisfying the performance required to be used as the lithium secondary battery for the ISS.

### EXAMPLES

### Example 1

A positive electrode which can be used for the lithium secondary battery of the present invention was produced in the following way.

Olivine-type lithium iron phosphate (LiFePO₄) whose surface was coated with amorphous carbon was used as an active substance for the positive electrode. As a conductive agent, 7.52 parts by mass of acetylene black and 1.88 parts by mass of carbon nanotube whose diameter was 15nm were mixed with 84.6 parts by mass of the active substance. The mixture was baked in a reducing atmosphere at 750 degrees centigrade for one hour to obtain a positive electrode material. As a binding agent, six parts by mass of polyvinylidene fluoride was added to the positive electrode material. As a dispersion solvent, N-methyl-2-pyrrolydone was added to the mixture. The mixture was kneaded to produce a positive electrode mixed agent (positive electrode slurry).

Projected portions each having a height of 100µm were formed on both surfaces of an aluminum foil having a thickness of 20µm. The positive electrode slurry was applied in a coating amount of 100g/m² to both surfaces of the aluminum foil and dried. The diameter of through-holes formed through the aluminum foil was 80µm. Thereafter the aluminum foil was pressed and cut to obtain the positive electrode for the lithium secondary battery. When the aluminum foil was pressed after the positive electrode slurry was applied to both surfaces thereof and dried, the total thickness of the positive electrode was 120µm.

A negative electrode which can be used for the lithium secondary battery of the present invention was produced in the following way.

4.8 parts by mass of soft carbon particles whose surfaces were coated with an amorphous carbon material was mixed with 91.2 parts by mass of natural graphite particles having a specific surface area of 8m²/g. The surfaces of the natural graphite particles were coated with the amorphous carbon material. Thereafter one part by mass of acetylene black, 0.5 parts by mass of Ketchen black, and 0.5 parts by mass of carbon nanotube were added to the mixture. The mixture was baked in a reducing atmosphere at 1100 degrees centigrade for one hour to obtain a negative electrode material. As a binder, two parts by mass of SBR/CMC emulsion solution was added to the negative electrode material to produce slurry. After the slurry was applied to both surfaces of a copper foil having a thickness of 10µm in a coating amount of 46g/m² per one surface thereof, the slurry was dried. The copper foil was pressed and cut by adjusting the total thickness thereof to 72µm to obtain the negative electrode.

By using the positive and negative electrodes produced as described above, there is produced a lithium secondary battery of 3. 4V-500mAh aluminum laminate film pack type composed of eight positive electrodes and nine negative electrodes by composing a separator of nonwoven cloth, made of cellulose fiber, which had a thickness of 20µm. As an electrolytic solution, 0.6mol/L of lithium hexafluorophosphate (LiPF₆) and 0.6mol/L of lithium bis fluorosulfonyl imide (LiSFl) were dissolved in a solution consisting of a mixture of EC solvent, MEC solvent, and DMC solvent.

After the lithium secondary battery obtained in the example 1 was initially charged and its capacity was checked, a discharged DCR value and a charged DCR value of each of the batteries the examples 1 and 2, and comparative examples 1, 2, and 3 were measured when the charged amounts (SOC) thereof were 50%. Regarding a measuring method, each battery was so adjusted that the charged amount (SOC) thereof was 50% in the measurement of each of the discharged DCR value and the charged DCR value at a roomtemperature (25 degrees centigrade). In an open circuit state, the voltage of each battery was measured in 10 seconds after the battery was discharged at electric currents of 1 ItA, 5 ItA, and 10 ItA to plot a voltage drop quantity with respect to the voltage of the open circuit each time the battery was discharged at each electric current. The inclination of a graph linearized by using a least squares method was set as the discharged DCR value in 10 seconds after the battery discharging started. In the case of charging each battery, in 10 seconds after the battery charging started, the charged DCR value of the battery was calculated from a graph obtained by plotting a rise amount of a charging voltage with respect to the voltage of the open circuit each time the battery whose charged amount (SOC) thereof was 50% was charged at electric currents of 1 ItA, 5 ItA, and 10 ItA. Thereafter at -30 degrees centigrade, the discharge duration of each battery down to 2.5V was measured at electric currents of 20 ItA and 30 ItA for each battery capacity. To compare regenerative charging performances of the batteries with one another, after the discharged capacity of each battery down to 2.0V was checked at a constant current of 1 ItA, the battery was subjected to a constant current charging up to 4.0V at each of current values of 30 ItA, 50 ItA, and 80 ItA to calculate the ratio of a regenerative recovery charging capacity of the battery to the discharge capacity thereof at 1 ItA as a charge efficiency. The regenerative charging performances of the batteries were compared with one another based on the charge efficiency. The results are shown in tables 2, 3, and 4.

### Example 2

An activated carbon layer was formed on the surface of the negative electrode material obtained in the example 1. As the method of forming the activated carbon layer, after activated carbon having a specific surface area of 1000m²/g and PVDF powder were mixed with each other, the mixture was baked at 350 degrees centigrade at which the PVDF melts and decomposes.

A lithium secondary battery of the example 2 was produced in a way similar to that of the example 1 except that the above-described negative electrode material was used. The battery of the example 2 could be discharged at -30 degrees centigrade and not less than 20 ItA, which is intended to achieve by the present invention and could be charged at not less than 50 ItA, which is also intended to achieve by the present invention. The battery had an effect similar to that of the battery of the example 1. The battery of the example 2 was evaluated in a way similar to that of the example 1. The results are shown in table 2, 3, and 4.

### Comparative Example 1

The olivine-type lithium iron phosphate (LiFePO₄) whose surface was coated with the amorphous carbon was used as the active substance of the positive electrode. As the conductive agent, after 7.52 parts by mass of the acetylene black and 1.88 parts by mass of the carbon nanotube whose diameter was 15nm were mixed with 84.6 parts by mass of the active substance of the positive electrode to obtain the positive electrode material without baking the mixture. As the binding agent, six parts by mass of the polyvinylidene fluoride was added to the positive electrode material. As the dispersion solvent, the N-methyl-2-pyrrolydone was added to the mixture. The mixture was kneaded to produce the positive electrode mixed agent (positive electrode slurry).

The positive electrode slurry was applied to both surfaces of the aluminum foil having a thickness of 20µm in a coating amount of 100g/m² and dried. Thereafter the aluminum foil was pressed and cut to obtain the positive electrode for the lithium secondary battery. When the aluminum foil was pressed after the positive electrode slurry was applied to both surfaces thereof and dried, the total thickness of the positive electrode was 120µm.

In consideration of the precipitation of metal lithium on the active substance of a negative electrode when the battery was discharged and charged at a large current, a negative electrode material whose surface was not coated with the amorphous carbon was prepared. 4.8 parts by mass of the soft carbon particles was mixed with 91.2 parts by mass of the natural graphite particles having a specific surface area of 8m²/g and an average particle diameter of about 5µm. One part by mass of the acetylene black, 0.5 parts by mass of the Ketchen black, and 0.5 parts by mass of the carbon nanotube were added to the mixture. As the binder, two parts by mass of the SBR/CMC emulsion solution was added to the mixture to produce slurry. After the slurry was applied to both surfaces of the copper foil having a thickness of 10µm in the coating amount of 46g/m² per one surface thereof, the slurry was dried. After the copper foil was pressed and cut by adjusting the total thickness thereof to 72µm, the negative electrode was obtained.

A lithium secondary battery of the comparative example 1 was produced in a way similar to that of the example 1 except that the positive and negative electrodes as described above were used. The performance of the lithium secondary battery of the comparative example 1 was evaluated in a way similar to that of the example 1. The results are shown in table 2, 3, and 4.

### Comparative Example 2

A lithium secondary battery of a comparative example 2 was produced in a way similar to that of the example 1 except that as a supporting electrolyte of an electrolytic solution of the lithium secondary battery of the comparative example 2, only 1. 2M-LiPF₆ was used in the lithium secondary battery of the example 1. The performance of the lithium secondary battery of the comparative example 2 was evaluated in a way similar to that of the example 1. The results are shown in table 2, 3, and 4.

### Comparative Example 3

A lithium secondary battery of a comparative example 3 was produced in a way similar to that of the example 1 except that as a separator of the lithium secondary battery of the comparative example 3, a polyethylene film having a thickness of 20µm was used in the lithium secondary battery of the example 1. The performance of the lithium secondary battery of the comparative example 3 was evaluated in a way similar to that of the example 1. The results are shown in table 2, 3, and 4.

**[Table 2]**

| | Discharge DCR value (mΩ) | Charge DCR value (mΩ) |
|---|---|---|
| Example 1 | 32 | 34 |
| Example 2 | 31 | 32 |
| Comparative example 1 | 150 | 137 |
| Comparative example 2 | 62 | 65 |
| Comparative example 3 | 74 | 74 |

Table 2 indicates that the lithium secondary battery of each of the examples 1 and 2 had a much lower resistance value than the lithium secondary batteries of the comparative examples and that although there was a little difference between the lithium secondary battery of the example 1 and that of the example 2 in the effect brought about by the presence or absence of the activated carbon in the charge DCR value, there was not a big difference therebetween in the effect of the activated carbon. The table 2 also indicates that although there was a difference in the effect among the lithium secondary batteries of the comparative example 1, 2, and 3, any of the component parts of the positive and negative electrodes, namely, the electrode material, the conductive material, the metal foil serving as the current collector, the organic electrolyte, and the separator constructing the was not used for the lithium secondary batteries of the comparative example 1, 2, and 3. Therefore the performances of the lithium secondary batteries of the comparative example 1, 2, and 3 were inferior to those of the lithium secondary batteries of the examples 1 and 2.

**[Table 3]**

| | 20ItA discharge duration (second) | 30ItA discharge duration (second) |
|---|---|---|
| Example 1 | 32 | 8 |
| Example 2 | 31 | 9 |
| Comparative example 1 | 0 | 0 |
| Comparative example 2 | 18 | 0 |
| Comparative example 3 | 11 | 0 |

Table 3 indicates that the lithium secondary batteries of the examples 1 and 2 could be discharged at 20 ItA and 30 ItA. Thus the lithium secondary batteries of the examples 1 and 2 are capable of substituting a lead acid battery for use in the idling stop system at -30 degrees centigrade. Table 3 also indicates that the lithium secondary batteries of the comparative example 1, 2, and 3 were improved slightly, but incapable of operating at a low temperature of -30 degrees centigrade. Thus these batteries are incapable of substituting the lead acid battery.

**[Table 4]**

| | 30ItA regenerative charging efficiency(%) | 50ItA regenerative charging efficiency(%) | 80ItA regenerative charging efficiency(%) |
|---|---|---|---|
| Example 1 | 87 | 59 | 17 |
| Example 2 | 90 | 62 | 19 |
| Comparative example 1 | 0 | 0 | 0 |
| Comparative example 2 | 43 | 15 | 0 |
| Comparative example 3 | 27 | 0 | 0 |

Table 4 indicates that the lithium secondary battery of each of the examples 1 and 2 could be charged at an ultra high speed within one minute (charging at 80 ItA) at a room temperature (25 degrees centigrade) . This is because the electric resistance of the entire lithium secondary battery of each of the examples 1 and 2 was low and in addition, as an electrochemical mechanism thereof, the amorphous carbon material portions of the positive electrode thereof and especially the amorphous carbon portions thereof disposed on the surface of the negative electrode thereof had a large specific surface area. Further, lithium ions were adsorbed in the activated carbon layer disposed on the surface of the negative electrode thereof like a capacitor, which prevented metal lithium from precipitating. Thereafter the lithium ions were gradually inserted into the layer between the active substance and the graphite-based carbon by diffusion in solid irrespective of a reaction speed corresponding to the current value of the charging electric current. On the other hand, in the lithium secondary battery of the comparative example 1, the charging reaction rate and the intercalation rate on the surface of the graphite of the negative electrode serving as the recipient of the lithium ions did not match each other and diffusion limitation occurred in the solid to cause the battery to polarize . As a result, the charging voltage reached 4. 0V early and applied a charging load to the battery. The positive and negative electrodes of the lithium secondary battery of the comparative examples 2 and 3 were similar to those of the examples in the component parts thereof. But the diffusion capacities thereof were low owing to the difference in the supporting electrolyte for the lithium ion between the batteries of the examples and those of the comparative examples 2 and 3. In addition, the absolute amount of the lithium ion at the electrode interface was short owing to the shortage of the electrolytic solution-holding performance of the separator. Thus the batteries of the comparative examples 2 and 3 polarized similarly to the lithium secondary battery of the comparative example 1.

### INDUSTRIAL APPLICABILITY

It has been found that the lithium secondary battery of the present invention can be discharged at not less than 20 ItA even when temperature is -30 degrees centigrade and has the performance capable of substituting the lead acid battery for use in the idling stop system and the performance surpassing that of the lead acid battery in that the battery of the present invention is capable of accomplishing regenerative charging at not less than 50 ItA. Therefore the battery of the present invention can be used as a power source of the idling stop system. In addition, the battery of the present invention operates at a low temperature as a power source for driving an HEV, a PHEV, and an EV. Furthermore, without increasing the capacity, volume, and weight of the battery of the present invention, the battery allows vehicles to extend a travel distance owing to its regenerative ability. Thus the battery of the present invention can be utilized for industrial batteries mounted on vehicles having performance effective for improving fuel efficiency.

### EXPLANATION OF REFERENCE SYMBOLS AND NUMERALS

- 1:: metal foil
- 2:: projected portion
- 3:: through-hole

## Claims

1. A lithium secondary battery for an engine starter which can be discharged at -30 degrees centigrade and quickly charged at 25 degrees centigrade by repeatedly occluding and releasing lithium ions in a construction in which an organic electrolytic solution is permeated into a wound or stacked electrode group or said electrode group is immersed in said electrolytic solution with a separator being interposed between a positive electrode having a positive electrode material formed on a metal foil and a negative electrode having a negative electrode material formed on a metal foil,
wherein said positive electrode material consists of a mixture of lithium-containing metal phosphate compound particles whose surfaces are coated with an amorphous carbon material and a conductive carbon material, in which atoms of said surface carbon materials are chemically bonded to one another;
said negative electrode material contains graphite particles having a specific surface area of not less than 6m²/g and soft carbon particles, in which said graphite particles and said soft carbon particles are coated with an amorphous carbon material, and surface carbon atoms of said graphite particles and those of said soft carbon particles are chemically bonded to one another;
said metal foil for the positive electrode has a plurality of through-holes, formed therethrough, each having a projected portion on at least one surface thereof;
said organic electrolytic solution consists of an organic solvent and a mixed electrolyte dissolved therein, said organic solvent is mixed carbonic acid ester, and said mixed electrolyte contains lithium hexafluorophosphate and lithium bis fluorosulfonyl imide; and
said separator consists of a fibrous nonwoven cloth having at least one of a hydrophilic group and oxide ceramics on a surface thereof.

2. A lithium secondary battery according to claim 1, wherein mixed carbonic acid ester contains ethylene carbonate, ethyl methyl carbonate, and dimethyl carbonate.

3. A lithium secondary battery according to claim 1, or 2, wherein a mixing ratio between said lithium hexafluorophosphate and said lithium bis fluorosulfonyl imide both contained in said mixed electrolyte is set to (lithium hexafluorophosphate/lithium bis fluorosulfonyl imide) = (1/0.2) to (0.4/0.8).

4. A lithium secondary battery according to any one preceding claim, wherein said fibrous nonwoven cloth is cellulose fibrous nonwoven cloth or polytetrafluoroethylene fibrous nonwoven cloth.

5. A lithium secondary battery according to any one preceding claim, wherein said negative electrode material contains activated carbon, and surface carbon atoms of particles composing said activated carbon and those composing said negative electrode material are chemically bonded to one another.

## Patentansprüche

1. Lithium-Sekundärbatterie für einen Motoranlasser, die bei -30 °C entladen werden kann und bei 25 °C durch wiederholtes Okkludieren und Freisetzen von Lithiumionen in einer Konstruktion schnell geladen werden kann, in der eine organische elektrolytische Lösung in eine gewickelte oder übereinander angeordnete Elektrodengruppe permeiert wird, oder wobei die Elektrodengruppe in die elektrolytische Lösung mit einem Separator eingetaucht wird, der zwischen einer positiven Elektrode, die ein positives Elektrodenmaterial aufweist, das auf einer Metallfolie gebildet wird, und einer negativen Elektrode geschaltet ist, die ein negatives Elektrodenmaterial aufweist, das auf einer Metallfolie gebildet wird,
wobei das positive Elektrodenmaterial aus einer Mischung von Partikeln einer Lithium enthaltenden Metallphosphat-Verbindung besteht, deren Oberflächen mit einem Material von amorphem Kohlenstoff und einem Material von leitfähigem Kohlenstoff beschichtet sind, worin Atome der Oberflächen-Kohlenstoffmaterialien untereinander chemisch gebunden sind;
wobei das negative Elektrodenmaterial Graphitpartikel enthält, die eine spezifische Oberfläche von nicht weniger als 6 m²/g aufweisen, sowie weiche Kohlenstoffpartikel, worin die Graphitpartikel und die weichen Kohlenstoffpartikel mit einem Material von amorphem Kohlenstoff beschichtet sind, und Oberflächen-Kohlenstoffatome der Graphitpartikel und solche der weichen Kohlenstoffpartikel chemisch miteinander gebunden sind;
wobei die Metallfolie der positiven Elektrode eine Mehrzahl von Durchgangslöchern aufweist, die dadurch hindurchgehend ausgebildet sind, von denen jedes einen hervortretenden Abschnitt auf mindestens einer der Oberflächen davon aufweist;
wobei die organische elektrolytische Lösung aus einem organischen Lösemittel und einem gemischten Elektrolyten besteht, der darin aufgelöst ist, wobei das organische Lösemittel gemischter Carbonsäureester ist und der gemischte Elektrolyt Lithiumhexafluorphosphat und Lithiumbisfluorsulfonylimid enthält; und
der Separator aus einem faserigen Vliestuch besteht, das mindestens eine hydrophile Gruppe und auf einer Oberfläche davon Oxidkeramik aufweist.

2. Lithium-Sekundärbatterie nach Anspruch 1, wobei der gemischte Carbonsäureester Ethylencarbonat, Ethylmethylcarbonat und Dimethylcarbonat enthält.

3. Lithium-Sekundärbatterie nach Anspruch 1 oder 2, wobei ein Mischverhältnis zwischen dem Lithiumhexafluorphosphat und dem Lithiumbisfluorsulfonylimid, die beide in dem gemischten Elektrolyten enthalten sind, auf (Lithiumhexafluorphosphat / Lithiumbisfluorsulfonylimid) = (1/0,2) bis (0,4/0,8) eingestellt wird.

4. Lithium-Sekundärbatterie nach einem der vorgenannten Ansprüche, wobei das faserige Vliestuch Cellulose faseriges Vliestuch oder Polytetrafluorethylen faseriges Vliestuch ist.

5. Lithium-Sekundärbatterie nach einem der vorgenannten Ansprüche, wobei das negative Elektrodenmaterial Aktivkohle enthält und Oberflächen-Kohlenstoffatome von Partikeln, aus denen sich die Aktivkohle zusammensetzt, und solchen, aus denen sich das negative Elektrodenmaterial zusammensetzt, chemisch miteinander gebunden sind.

## Revendications

1. Batterie secondaire au lithium pour démarreur de moteur qui peut être déchargée à -30 degrés centigrades et rapidement chargée à 25 degrés centigrades en bloquant et en libérant de façon répétée des ions lithium dans une structure dans laquelle on fait pénétrer une solution électrolytique organique dans un groupe d'électrodes enroulées ou empilées ou ledit groupe d'électrodes est immergé dans ladite solution électrolytique avec un séparateur intercalé entre une électrode positive ayant un matériau d'électrode positive formé sur une feuille métallique et une électrode négative ayant un matériau d'électrode négative formé sur une feuille métallique,
dans laquelle ledit matériau d'électrode positive consiste en un mélange de particules de composé de phosphate métallique contenant du lithium dont les surfaces sont revêtues avec un matériau de carbone amorphe et un matériau de carbone conducteur, dans lequel les atomes desdits matériaux carbonés de surface sont liés chimiquement entre eux ;
ledit matériau d'électrode négative contient des particules de graphite ayant une surface spécifique non inférieure à 6 m²/g et des particules de carbone mou, dans lequel lesdites particules de graphite et lesdites particules de carbone mou sont revêtues avec un matériau de carbone amorphe, et les atomes de carbone de surface desdites particules de graphite et ceux desdites particules de carbone mou sont liés chimiquement entre eux ;
ladite feuille métallique pour l'électrode positive a une pluralité de trous traversants, formés à travers celle-ci, chacun ayant une partie faisant saillie sur au moins une surface de celle-ci ;
ladite solution électrolytique organique consiste en un solvant organique et un électrolyte mixte dissous dans celui-ci, ledit solvant organique est un ester d'acide carbonique mixte, et ledit électrolyte mixte contient de l'hexafluorophosphate de lithium et du bis fluorosulfonyl imide de lithium ; et
ledit séparateur consiste en une étoffe fibreuse non tissée ayant au moins un groupe hydrophile et une céramique d'oxyde sur une surface de celle-ci.

2. Batterie secondaire au lithium selon la revendication 1, dans laquelle l'ester d'acide carbonique mixte contient du carbonate d'éthylène, du carbonate d'éthyle et de méthyle et du carbonate de diméthyle.

3. Batterie secondaire au lithium selon la revendication 1 ou 2, dans laquelle un rapport de mélange entre ledit hexafluorophosphate de lithium et ledit bis fluorosulfonyl imide de lithium contenus tous les deux dans ledit électrolyte mixte est réglé à (hexafluorophosphate de lithium/bis fluorosulfonyl imide de lithium) = (1/0,2) à (0,4/0,8).

4. Batterie secondaire au lithium selon l'une quelconque des revendications précédentes, dans laquelle ladite étoffe fibreuse non tissée est une étoffe fibreuse non tissée cellulosique ou une étoffe fibreuse non tissée de polytétrafluoroéthylène.

5. Batterie secondaire au lithium selon l'une quelconque des revendications précédentes, dans laquelle ledit matériau d'électrode négative contient du charbon actif, et les atomes de carbone de surface des particules composant ledit charbon actif et ceux composant ledit matériau d'électrode négative sont liés chimiquement entre eux.
